# EUROPÄISCHE PATENTSCHRIFT

(11) **EP 3 962 767 B1**
(45) Veröffentlichungstag und Bekanntmachung des Hinweises auf die Patenterteilung: **04.09.2024**
(21) Anmeldenummer: 20722479.1
(22) Anmeldetag: 09.04.2020
(51) Int. Cl.: B60K 35/10, B60K 35/28

(54) **FAHRERINFORMATIONSSYSTEM MIT VERKNÜPFUNGEN ZU SUCHFUNKTIONEN EINZELNER DIENSTE**
DRIVER INFORMATION SYSTEM WITH LINKS TO SEARCH FUNCTIONS FOR INDIVIDUAL SERVICES
SYSTÈME D'INFORMATION DU CONDUCTEUR COMPRENANT DES LIENS VERS LES FONCTIONS DE RECHERCHE DE DIFFÉRENTS SERVICES

(30) Priorität: 02.05.2019 DE 102019206309
(43) Veröffentlichungstag der Anmeldung: 09.03.2022
(73) Patentinhaber: VOLKSWAGEN AKTIENGESELLSCHAFT, 38440 Wolfsburg (DE)
(72) Erfinder: WENGELNIK, Heino, 38442 Wolfsburg (DE); SCHMIDTKE, Stefan, 38442 Wolfsburg (DE); HOFFMANN, Marc, 38154 Königslutter (Brunsleberfeld) (DE); BORTFELD, Ulrich, 38112 Braunschweig (DE)
(86) Internationale Anmeldenummer: PCT/EP2020/060150
(87) Internationale Veröffentlichungsnummer: WO 2020/221571

(56) Entgegenhaltungen:
- EP-A1- 3 296 892

## Beschreibung

Die Erfindung betrifft ein Fahrerinformationssystem für ein Fahrzeug und ein Verfahren zum Betreiben eines Fahrerinformationssystems von einem Fahrzeug. Bei dem Fahrzeug kann es sich insbesondere um ein Kraftfahrzeug und ferner insbesondere um einen Personenkraftwagen oder Lastkraftwagen handeln.

Es ist bekannt, dass Fahrerinformationssysteme über Benutzereingaben bedienbar sind. Die Benutzereingaben können mittels verschiedener Eingabemodi eingegeben werden. Beispielsweise stehen typischerweise ein Spracheingabemodus, ein Tastatureingabemodus, wobei die Tastatur auch lediglich in einer Anzeigeeinrichtung einblendbar sein kann, d.h. eine sogenannte Softtastatur sein kann, eine Bedienung per Dreh-Drück-Schalter, eine Handschrifteingabe, z.B. durch Fingerbewegungen auf einer berührungsempfindlichen Oberfläche, oder eine Gestenerkennung zur Verfügung. Auch erfindungsgemäß können sämtliche dieser Eingabemodi allein oder in beliebiger Kombination vorgesehen sein.

Je nach Eingabemodus ist von einem Bediener des Fahrerinformationssystems ein unterschiedliches Ausmaß an Aufmerksamkeit und Geschick erforderlich. Handelt es sich bei dem Bediener um den Fahrzeugfahrer selbst und beispielsweise nicht um einen anderen Fahrzeuginsassen, der hierin ebenso ein Bediener des Fahrerinformationssystems sein kann, kann dies die Aufmerksamkeit bei der Fahrzeugführung in unerwünschter Weise negativ beeinträchtigen.

Es ist ferner bekannt, dass die Dienste über Suchfunktionen verfügen können, um innerhalb von diesen Diensten zugeordneten bzw. von diesen abrufbaren Daten nach relevanten Suchtreffern zu suchen. Für einen Benutzer kann es jedoch aufwendig oder auch nur iterativ möglich sein, zum Auffinden benötigter Informationen den hierfür geeigneten Dienst zu identifizieren bzw. die Suchfunktionen verschiedener Dienste iterativ auszuprobieren.

Aus der EP 3 296 892 A1 ist eine Benutzerschnittstelle für den Zugriff auf eine Menge von Funktionen bekannt, wobei einer ersten Teilmenge der Funktionen Menüeinträge der Benutzerschnittstelle zugeordnet sind, über die die Funktionen aufrufbar sind, wobei einer zweiten Teilmenge der Funktionen keine Menüeinträge zugeordnet sind und die Funktionen stattdessen über eine Suchfunktion der Benutzerschnittstelle aufrufbar sind.

Eine Aufgabe der Erfindung ist es daher, das Bedienen eines Fahrerinformationssystems zu vereinfachen, insbesondere dahingehend, dass der Bedienkomfort aus Sicht des Fahrers steigt und/oder dass Sucheingaben mit einem geringen Ablenkungspotential vom Straßenverkehr möglich sind.

Diese Aufgabe wird mit einem Fahrerinformationssystem gemäß dem beigefügten Anspruch 1 und einem Verfahren gemäß dem beigefügten Anspruch 8 gelöst. Vorteilhafte Weiterbildungen sind in den abhängigen Ansprüchen angegeben. Es versteht sich, dass sämtliche der einleitend erwähnten Merkmale und Ausführungen auch bei der vorliegenden Erfindung vorgesehen sein bzw. auf diese zutreffen können.

Eine erste Erkenntnis der Erfindung besteht darin, neben dienstspezifischen Suchfunktionen, die hierin auch als Dienstsuchfunktionen bezeichnet werden, eine Hauptsuchfunktion bereitzustellen, die dazu eingerichtet ist, Suchtreffer von und/oder für und/oder aus mehreren Diensten zu ermitteln. Bildlich gesprochen kann die Hauptsuchfunktion in mehreren Diensten gleichzeitig suchen. Eine solche Hauptsuchfunktion kann auch als globale Suchfunktion bezeichnet werden.

Weiter ist gemäß einem Grundgedanken der Erfindung vorgesehen, in einer Benutzerschnittstelle und z.B. wenn kein einzelner Dienst aktuell aufgerufen wurde und/oder vordergründig betrieben wird, die Hauptsuchfunktion anzuzeigen (z.B. in wenigstens einer Ansicht der Benutzerschnittstelle), gleichzeitig aber auch die Verknüpfung zu einer Dienstsuchfunktion von wenigstens einem der Dienste anzuzeigen. Bevorzugt ist eine Mehrzahl derartiger Verknüpfungen gleichzeitig anzeigbar.

Ein Bediener kann somit die Hauptsuchfunktion bedienen und bevorzugt darin unmittelbar eine Sucheingabe eingeben (z.B. per Sprachbefehl, Tastatureingabe oder Handschrifterkennung). Hierfür kann ihm eine entsprechende Suchmaske angezeigt werden. Gleichzeitig wird dem Bediener aber die Verknüpfung zu wenigstens einer der dienstspezifischen Dienstsuchfunktionen angezeigt. Somit hat der Bediener auch die Möglichkeit, direkt in die entsprechende Dienstsuchfunktion zu wechseln, beispielsweise wenn er bevorzugt Treffer von dem dazugehörigen Dienst erhalten möchte.

Hierdurch kann die Wahrscheinlichkeit verringert werden, dass dem Bediener irrelevante Suchtreffer über die Hauptsuchfunktion angezeigt werden, die aus nicht relevanten Diensten stammen. Beispielsweise kann der Bediener dann, wenn er eine Adresse sucht, unmittelbar über die entsprechende Verknüpfung die Dienstsuchfunktion eines Navigationsdienstes aufrufen und somit vermeiden, dass ihm über die Hauptsuchfunktion infolge einer Adresseingabe auch Musiktitel oder ähnliche nicht relevante Inhalte als Suchtreffer angezeigt werden. Dies erhöht den Bedienkomfort, kann aber auch eine direktere und intuitivere Bedienung ermöglichen, die weniger Aufmerksamkeit insbesondere bei der Interpretation der gelieferten Suchresultate erfordert. Somit wird ein Ablenkungspotential bei der Bedienung des Fahrerinformationssystems reduziert und wird die Sicherheit erhöht, da die Aufmerksamkeit des Fahrers in weniger großem Umfang beeinträchtigt ist.

Konkret schlägt die Erfindung ein Fahrerinformationssystem für ein Fahrzeug mit einer (z.B. grafischen) Benutzerschnittstelle und mit einer Anzahl von Diensten vor, die von einem Bediener über die Benutzerschnittstelle aufrufbar sind, wobei die Benutzerschnittstelle eine Hauptsuchfunktion umfasst, mit der Suchtreffer verschiedener Dienste ermittelbar sind (z.B. durch gleichzeitiges Durchsuchen und/oder Zugreifen auf die entsprechenden Dienste) und die Dienste jeweils eine Dienstsuchfunktion umfassen, mit der Suchtreffer eines entsprechenden Dienstes (und bevorzugt ausschließlich eines entsprechenden Dienstes) ermittelbar sind; wobei die Benutzerschnittstelle eingerichtet ist, gleichzeitig die Hauptsuchfunktion (z.B. eine Suchmaske hiervon) und eine Verknüpfung zu einer Suchfunktion von wenigstens einem der Dienste anzuzeigen.

Die (vorzugsweise grafische) Benutzerschnittstelle kann mit einer Anzeigeeinrichtung des verwendeten Informationssystems anzeigbar sein. Hierbei kann es sich insbesondere um einen berührungsempfindlichen Bildschirm (Touchscreen) handeln. Die Benutzerschnittstelle kann mehrere Ansichten umfassen, die nach Maßgabe einer Benutzereingabe aufrufbar sind. Insbesondere kann die Benutzerschnittstelle eine Menüstruktur definieren, durch die sich der Benutzer mit Hilfe geeigneter Benutzereingaben hindurch navigieren kann. Die Dienste können abrufbare bzw. aktivierbare Menüpunkte innerhalb dieser Menüstruktur definieren. Beispielsweise können Verknüpfungen zu den Diensten in wenigstens einer Ansicht der Benutzerschnittstelle dargestellt werden. Diese Verknüpfungen können virtuelle Eingabeelemente sein und/oder Textfelder oder Symbole (bzw. Icons). Ein Bediener kann diese z.B. antippen oder anderweitig aktivieren, woraufhin dann der dazugehörige Dienst aufgerufen und ausgeführt wird.

Die Hauptsuchfunktion kann zum Ermitteln von Suchtreffern (von und/oder aus und/oder für) verschiedene Dienste diese Dienste bzw. dazugehörige oder von diesen abrufbare Daten selbst aktiv (d.h. direkt) durchsuchen. Sie kann aber auch auf die Dienstsuchfunktionen dieser Dienste zugreifen, indem sie beispielsweise eine über die Hauptsuchfunktion eingegebene Such-Zeichenkette an diese Dienstsuchfunktionen weitergibt und von diesen dann darauf basierend ermittelte Suchtreffer erhält. Die Hauptsuchfunktion kann also lediglich mittelbar die Suchtreffer der verschiedenen Dienste ermitteln.

Die Dienstsuchfunktionen können hingegen bevorzugt lediglich Suchtreffer eines jeweils dazugehörigen Dienstes ermitteln, wobei diese wiederum Daten durchsuchen können, die dem Dienst zugeordnet sind und/oder von diesem (z.B. online) abrufbar sind.

Bei dem Dienst kann es sich z.B. einen Navigationsdienst, einen Musikwiedergabedienst, einen Radiodienst, ein (digitales) Benutzerhandbuch oder ein (digitales) Adressbuch handeln. Jegliche der genannten Dienste können allein oder in beliebiger Kombination bei einem erfindungsgemäßen Fahrerinformationssystem vorgesehen sein.

Die Hauptsuchfunktion und auch die Dienstfunktionen können jeweils anzeigbare Suchmasken umfassen (beispielsweise ein Suchfeld bzw. ein nach Maßgabe von Benutzereingaben ausfüllbares Textfeld). Weiter können die Hauptsuchfunktion und die Dienstfunktionen jeweils Anzeigebereiche für eine Trefferliste umfassen, in der ermittelte Suchtreffer angezeigt werden. Die Trefferliste kann auch dynamisch aktualisiert werden, beispielsweise je nachdem, wann einzelne Suchtreffer ermittelt werden und/oder ob noch weitere Benutzereingaben erfolgen. Nach Erhalt von wenigstens einem Zeichen einer Such-Zeichenkette kann die Suche unmittelbar beginnen und können bereits ermittelte Suchtreffer z.B. in einer entsprechenden Trefferliste angezeigt werden.

Die Verknüpfung zu einer Dienstsuchfunktion kann als ein Textfeld und/oder als ein Symbol angezeigt werden. Beispielsweise kann das Textfeld eine identifizierende Angabe und/oder Bezeichnung des dazugehörigen Dienstes enthalten. Für einen Navigationsdienst kann das Textfeld z.B. die Bezeichnungen "Navi" oder Navigation" enthalten, ein Musikwiedergabedienst kann über die Bezeichnung "Musik" identifiziert werden usw.

Die Verknüpfungen können durch Antippen oder anderweitige Aktivierung aufgerufen werden. Im Anschluss daran kann von einer Ansicht der Benutzerschnittstelle zu einer Ansicht des Dienstes gewechselt werden und insbesondere zu einer Ansicht, in der die Dienstsuchfunktion des dazugehörigen Dienstes angezeigt wird. Diese Ansicht kann eine Anzeigeeinrichtung vollständig ausfüllen und/oder eine Ansicht der Benutzerschnittstelle vollständig überlagern. Es ist jedoch auch eine lediglich teilweise Überlagerung möglich, z.B. wenn die Ansicht des Dienstes als Pop-Up angezeigt wird.

Neben den vorstehend erläuterten Vorteilen liegt eine erfindungsgemäße Erkenntnis darin, dass ein Bediener z.B. nach einem Start des Fahrzeugs standardmäßig zunächst mit der Benutzerschnittstelle interagiert bzw. diese Benutzerschnittstelle auf einer Anzeigeeinrichtung des Fahrerinformationssystems angezeigt wird. Möchte er eine Suche betätigen, wird er somit oftmals zunächst von der Hauptsuchfunktion ausgehen bzw. wird ihm diese in der Regel standardmäßig als Ausgangspunkt angezeigt. Über die erfindungsgemäß vorgesehenen gleichzeitig angezeigten Verknüpfungen kann der Bediener aber eine gezieltere Suche direkt aktivieren und zu der Dienstsuchfunktion der Dienste wechseln. Er muss nicht, wie bei bisherigen Lösungen der Fall, zunächst innerhalb der Benutzerschnittstelle nach einer Verknüpfung zu dem Dienst suchen, dann den Dienst aufrufen und dann innerhalb des Dienstes wiederum zu der gewünschten Dienstsuchfunktion navigieren. Dies erhöht den Bedienkomfort, verringert die erforderliche Bedienzeit und auch das Ausmaß an erforderlicher Aufmerksamkeit des Fahrers, was wiederum zu einer Verbesserung des erzielbaren Sicherheitsniveaus führt.

Dabei ist in diesem Zusammenhang vorgesehen, dass die Such-Zeichenkette der Hauptsuchfunktion in eine Suchmaske der Dienstsuchfunktion übernommen wird.

Beispielsweise kann dann, wenn die Dienstsuchfunktion aufgerufen wurde, die Suchzeichenkette der Hauptsuchfunktion unmittelbar angezeigt werden. Bevorzugt wird die Such-Zeichenkette der Hauptsuchfunktion auch bereits dann angezeigt, wenn noch keine Verknüpfung betätigt wurde. Beispielsweise kann diese nach Maßgabe einer Spracheingabe oder einer Tastaturbetätigung fortlaufend vervollständigt und in einer Suchmaske der Hauptsuchfunktion angezeigt werden. Erfolgt dann aber durch Betätigen einer Verknüpfung ein Wechsel zu einer Dienstsuchfunktion, kann in oder für diese die Such-Zeichenkette unmittelbar in einer Suchmaske dieser Dienstsuchfunktion angezeigt werden. Beispielhaft kann z.B. dann, wenn ein Bediener die Such-Zeichenkette "Bahnh" per eingeblendeter Softtastatur eingegeben hat und dann über die Verknüpfung einen Navigationsdienst aufruft, zu einer Ansicht des Navigationsdienstes und insbesondere zu einer Suchmaske der Dienstsuchfunktion dieses Navigationsdienstes gewechselt werden. Darin kann dann ebenfalls bereits die Such-Zeichenkette "Bahnh" angezeigt werden. Eine Such-Zeichenkette kann alternativ auch als Textstring oder Suchstring bezeichnet werden.

Gemäß einer Weiterbildung ist bei einer Betätigung einer Verknüpfung der dazugehörige Dienst anzeigbar.

Insbesondere kann gemäß einer Ausführungsform bei einem Betätigen einer Verknüpfung die Hauptsuchfunktion nicht mehr angezeigt werden und/oder nicht mehr bedienbar sein. Stattdessen kann der zur Verknüpfung gehörige Dienst und/oder dessen Dienstsuchfunktion angezeigt werden.

Zusammengefasst kann also bei einem Betätigen einer Verknüpfung zwischen der Hauptsuchfunktion und den Dienstsuchfunktionen und/oder den Diensten der entsprechenden Verknüpfung gewechselt werden. Beispielsweise können in der vorstehend erläuterten Weise Ansichten der Benutzerschnittstelle durch Ansichten der Dienste zumindest teilweise ersetzt werden, wobei diese Ansichten der Dienste dann bevorzugt die Dienstsuchfunktion enthalten und/oder eine Suchmaske hiervon anzeigen. Hierüber wird eine schnelle und intuitive Navigation innerhalb des Fahrerinformationssystems ermöglicht.

Eine weitere Ausführungsform sieht vor, dass das Fahrerinformationssystem dazu eingerichtet ist, spätestens bei einem Betätigen einer Verknüpfung eine bereits eingegebene Such-Zeichenkette der Hauptsuchfunktion an die Dienstsuchfunktion des dazugehörigen (d.h. zu der Verknüpfung gehörigen) Dienstes zu übermitteln. Wie erwähnt, kann die Hauptsuchfunktion Suchtreffer der Dienste lediglich mittelbar ermitteln und hierfür auf Dienstsuchfunktionen dieser Dienste zugreifen. In diesem Fall kann auch vor dem Betätigen einer Verknüpfung eine Such-Zeichenkette der Hauptsuchfunktion an die Dienstsuchfunktionen übermittelt werden, bevorzugt aber ohne dass dies zu einer veränderten Ansicht bzw. einem veränderten Anzeigeinhalt der Benutzerschnittstelle führt. Insbesondere können diesem Fall die Dienste selbst und/oder deren Dienstsuchfunktionen nicht angezeigt werden. Es ist aber ebenso möglich, die Such-Zeichenkette erst dann an die Dienstsuchfunktionen zu übergeben, wenn ein entsprechender Dienst über eine dazugehörige Verknüpfung aufgerufen wird.

Gemäß einer Weiterbildung sind für eine Such-Zeichenkette der Hauptsuchfunktion Suchtreffer mehrerer Dienste gleichzeitig anzeigbar. Dies kann mittels der vorstehend geschilderten Trefferliste erfolgen. Diese kann Suchtreffer von mehreren Diensten enthalten und auch gleichzeitig anzeigen.

In diesem Zusammenhang kann ferner vorgesehen sein, dass die Suchtreffer nach Diensten gruppiert anzeigbar sind. Beispielsweise können die Suchtreffer nach Diensten geordnet, zusammengefasst und/oder aneinandergereiht sein. Insbesondere können Suchtreffer desselben Dienstes als eine Gruppe gruppiert und/oder oder zusammengefasst oder geordnet werden. Das Anzeigen entsprechender Gruppen kann umfassen, dass die dazugehörigen Dienste durch eine zumindest teilweise Einrahmung, virtuelle Balken oder anderweitige grafische Elemente als eine Gruppe kenntlich gemacht werden und/oder von anderen Gruppen abgehoben werden.

Auch kann eine Gruppierung mittels einer geeigneten Farbwahl (z.B. eine bestimmte farbige Gruppe), einer geeigneten Schriftwahl (z.B. eine spezifische Schriftgröße, Schriftart oder auch Schriftform je Gruppe) oder einer anderweitigen grafischen Abhebung von anderen Gruppen differenziert werden. Jeder Gruppe kann zudem eine identifizierende Angabe zugeordnet werden, beispielsweise eine Textangabe oder ein Symbol, über den der dazugehörige Dienst identifiziert ist. Vorzugsweise erfolgt dies aber unmittelbar dadurch, dass den Gruppen auch jeweils eine Verknüpfung zu dem dazugehörigen Dienst zugeordnet und diese auch angezeigt wird (beispielsweise in demselben Anzeigebereich, in dem auch die Suchtreffer-Gruppe angezeigt wird).

Genauer gesagt kann ferner vorgesehen sein, dass einer angezeigten Gruppe von Suchtreffern die Verknüpfung zu dem Dienst dieser Gruppe zugeordnet wird. Hierunter kann verstanden werden, dass diese Verknüpfung gemeinsam mit der Gruppe angezeigt wird und/oder dieser in gleicher Weise grafisch als zu dieser Gruppe gehörig kenntlich gemacht wird, also z.B. eine gleiche Farbe, Schrift oder Position innerhalb eines Anzeigebereiches aufweist.

Ein Bediener kann somit direkt Rückmeldung darüber erhalten, in welchen Diensten für ihn relevante Suchtreffer vorliegen und kann dann die Dienstsuchfunktion dieses Dienstes direkt mit der entsprechenden Verknüpfung aufrufen. Dies erhöht den Bedienkomfort weiter und verringert auch die erforderliche Aufmerksamkeit bei der Bedienung.

Gemäß einer Weiterbildung ist ferner vorgesehen, dass nur von denjenigen Diensten Verknüpfungen angezeigt werden, für die Suchtreffer auf Basis einer Such-Zeichenkette der Hauptsuchfunktion ermittelt wurden. Dies betrifft insbesondere die Variante, bei der die Hauptsuchfunktion die Such-Zeichenkette an Dienstsuchfunktionen der einzelnen Dienste übermittelt, um Suchtreffer dieser Dienste sozusagen lediglich mittelbar zu erhalten.

Anders ausgedrückt kann im Hintergrund und vorzugsweise ohne dass dies einem Benutzer grafisch angezeigt wird bei Erhalten einer Such-Zeichenkette bereits in dem einzelnen Dienst nach relevanten Suchtreffern gesucht werden. Dies erfolgt bevorzugt, sobald zumindest ein Zeichen der Such-Zeichenkette vorliegt oder eingegeben wurde. Erst wenn für den Dienst ein Suchtreffer ermittelt wurde, kann dann die Verknüpfung hierzu eingeblendet werden. Die eingeblendeten Verknüpfungen können auch fortlaufend aktualisiert werden, sodass z.B. bei einer zunehmenden Vervollständigung der Such-Zeichenkette oder erst bei einem verzögerten Auffinden von Suchtreffern neue Verknüpfungen angezeigt werden können bzw. auf einer Anzeigeeinrichtung erst nach und nach erscheinen. Dies bietet den Vorteil, dass dem Benutzer keine tatsächlich nicht relevanten Verknüpfungen angezeigt werden.

Die Erfindung betrifft ferner ein Verfahren zum Betreiben eines Fahrerinformationssystems von einem Fahrzeug, wobei das Fahrerinformationssystem eine Benutzerschnittstelle mit einer Mehrzahl von Diensten umfasst, die von einem Bediener über die Benutzerschnittstelle aufrufbar sind, und wobei die Benutzerschnittstelle eine Hauptsuchfunktion umfasst, mit der Suchtreffer verschiedener Dienste ermittelbar sind, und die Dienste jeweils eine Dienstsuchfunktion umfassen, mit der Suchtreffer eines entsprechenden Dienstes ermittelbar sind; und wobei das Verfahren umfasst: gleichzeitiges Anzeigen der Hauptsuchfunktion und wenigstens einer Verknüpfung zu einer Dienstsuchfunktion von einem der Dienste.

Das Verfahren kann jeglichen weiteren Schritt und jegliches weitere Merkmal umfassen, um sämtliche der hierin geschilderten Funktionsweisen, Betriebszustände, Wechselwirkungen und Effekte bereitzustellen, insbesondere wenn diese im Zusammenhang mit dem Fahrerinformationssystem erläutert werden. Beispielsweise können sämtliche Weiterbildungen, Varianten und Ausführungen zu gleichlautenden Fahrerinformationssystem-Merkmalen auch auf die Merkmale des Verfahrens zutreffen bzw. für diese vorgesehen sein. Allgemein kann das Verfahren mit einem Fahrerinformationssystem gemäß jeglicher der vorstehenden und nachstehenden Aspekte ausgeführt werden.

Im Folgenden werden Ausführungsformen der Erfindung anhand der beigefügten schematischen Figuren erläutert. Gleichartige oder gleichwirkende Merkmale können dabei mit den gleichen Bezugszeichen versehen sein.
- Fig. 1: zeigt ein Fahrerinformationssystem gemäß einem Ausführungsbeispiel der Erfindung, wobei die Darstellung einer Mischform aus tatsächlichen Komponenten des Fahrerinformationssystems und hiervon bereitgestellten Funktionen und/oder ausgeführten Diensten entspricht;
- Fig. 2: zeigt ein Ablaufschema für ein erfindungsgemäßes Verfahren, das mit dem Fahrerinformationssystem aus Fig. 1 ausführbar ist; und
- Fig. 3 bis Fig. 5: zeigen jeweils Beispiele für Trefferlisten der Hauptsuchfunktion des Fahrerinformationssystems aus Fig. 1.

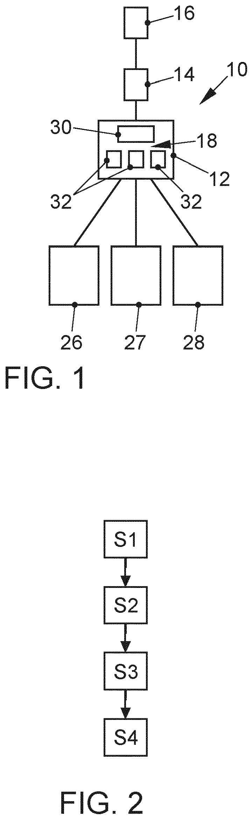

Fig. 1 zeigt ein erfindungsgemäßes Fahrerinformationssystem 10, das in einem nicht gesondert dargestellten Fahrzeug verbaut ist, z.B. in einer Mittelkonsole hiervon. Das Fahrerinformationssystem 10 umfasst eine Anzeigeeinrichtung 12, bevorzugt in Form eines Touchscreens. Weiter umfasst das Fahrerinformationssystem 10 eine Prozessoreinrichtung 14, die wenigstens einen Mikroprozessor und eine Speichereinrichtung 16 umfasst. In der Speichereinrichtung 16 können Daten hinterlegt sein und insbesondere Softwarekomponenten und/oder Softwareapplikationen, die von der Prozessoreinrichtung 14 zum Bereitstellen der hierin geschilderten Dienste ausführbar sind. Auch die Benutzerschnittstelle kann als eine entsprechende Softwarekomponente realisiert sein und von der Prozessoreinrichtung 14 ausgeführt werden. Die Prozessoreinrichtung 14 kann durch Abarbeiten von Programmanweisungen der Softwarekomponenten die hierin geschilderten Funktionsweisen bereitstellen und/oder die verfahrensgemäßen Schritte ausführen.

Als eine Haupt-Arbeitsoberfläche wird auf der Anzeigeeinrichtung 12 standardgemäß eine grafische Benutzerschnittstelle 18 angezeigt. Diese umfasst mehrere Ansichten, die einzelnen Punkten einer Menüstruktur zugeordnet sind. Ein Bediener kann durch Benutzereingaben innerhalb der Menüstruktur navigieren und dadurch die angezeigten Ansichten aufrufen bzw. zwischen diesen wechseln.

Benutzereingaben können in dem gezeigten Beispiel allgemein in Form von Spracheingaben erfolgen (z.B. mittels einer nicht gesondert dargestellten Mikrofoneinrichtung), über eine selektiv einblendbare Soft-Tastatur oder über eine Handschriftenerkennung.

Die grafische Benutzerschnittstelle 18 umfasst eine Hauptsuchfunktion 30, die in wenigstens einer Ansicht der Benutzerschnittstelle 18 angezeigt wird. Insbesondere wird ein Suchfenster oder, mit anderen Worten, eine Suchmaske der Hauptsuchfunktion 30 angezeigt. Hierbei kann es sich um ein Textfeld handeln, in dem eine z.B. nach Maßgabe einer Spracheingabe erkannte Such-Zeichenkette eingebbar ist und/oder in der eine solche Such-Zeichenkette per Tastaturbedienung eintippbar ist.

Dargestellt sind des Weiteren auch mehrere Dienste 26-28, die über die grafische Benutzerschnittstelle nach Maßgabe einer entsprechenden Benutzereingabe selektiv aufrufbar sind. Infolge eines Aufrufens können diese zusätzlich zu, bevorzugt aber anstelle der grafischen Benutzerschnittstelle 18 mit der Anzeigeeinrichtung 12 angezeigt werden. Die Dienste 26-28 sind wiederum als einzelne Softwarekomponenten realisiert, die bei einem Aufruf von der Prozessoreinrichtung 14 ausgeführt werden. In dem gezeigten Beispiel handelt es sich um einen Navigationsdienst 26, einen Musikwiedergabedienst 27 und ein (digitales) Handbuch 28. Hierfür können in wenigstens einer Ansicht der grafischen Benutzerschnittstelle 18 Verknüpfungen angezeigt werden, über die ein Bediener dann die entsprechenden Dienste 26-28 aufrufen kann.

Die bereits geschilderte Hauptsuchfunktion 30 ist dazu eingerichtet, Suchtreffer über eine vorstehend erwähnte indirekte und/oder direkte Suche für die Dienste 26-28 zu ermitteln. Die Dienste 26-28 umfassen aber selbst auch jeweils eine Dienstsuchfunktion, um Suchtreffer in für diese Dienste 26-28 spezifischen Daten zu ermitteln.

Um die verschiedenen Dienstsuchfunktionen zu koordinieren und insbesondere die vorstehend erwähnten Vorteile zu erzielen, werden einem Bediener deshalb in wenigstens einer Ansicht der grafischen Benutzerschnittstelle 18 auf der Anzeigeeinrichtung 12 gleichzeitig die Hauptsuchfunktion 30 (insbesondere eine Suchmaske hiervon) sowie Verknüpfungen 32 zu den jeweiligen Diensten 26-28 angezeigt. Bei den Verknüpfungen 32 handelt es sich um z.B. per Touch-Bedienung aktivierbare bzw. auslösbare Textfelder, die über eine geeignete Bezeichnung den jeweils verknüpften Dienst 26-28 angeben.

Wird eine der Verknüpfungen 32 betätigt, wird statt der grafischen Benutzerschnittstelle 28 zu einer Ansicht von dem dazugehörigen Dienst 26-28 gewechselt. Bevorzugt wird dann unmittelbar die Dienstsuchfunktion dieses Dienstes 26-28 angezeigt. Hat ein Benutzer bereits begonnen, in die Suchmaske der Hauptsuchfunktion 30 eine Such-Zeichenkette einzugeben, kann diese direkt in die Dienstsuchfunktion des entsprechenden Dienstes bzw. der Suchmaske übernommen und einem Bediener angezeigt werden. Aus Sicht des Bedieners kann somit ein nahtloser Übergang stattfinden. Die Dienstsuchfunktion kann dann auch bereits Suchtreffer basierend auf dieser Such-Zeichenkette ermitteln und/oder eine darauf basierend ermittelte Trefferliste anzeigen. Diese Trefferliste enthält dann aber bevorzugt ausschließlich Suchtreffer für den entsprechenden Dienst 26-28.

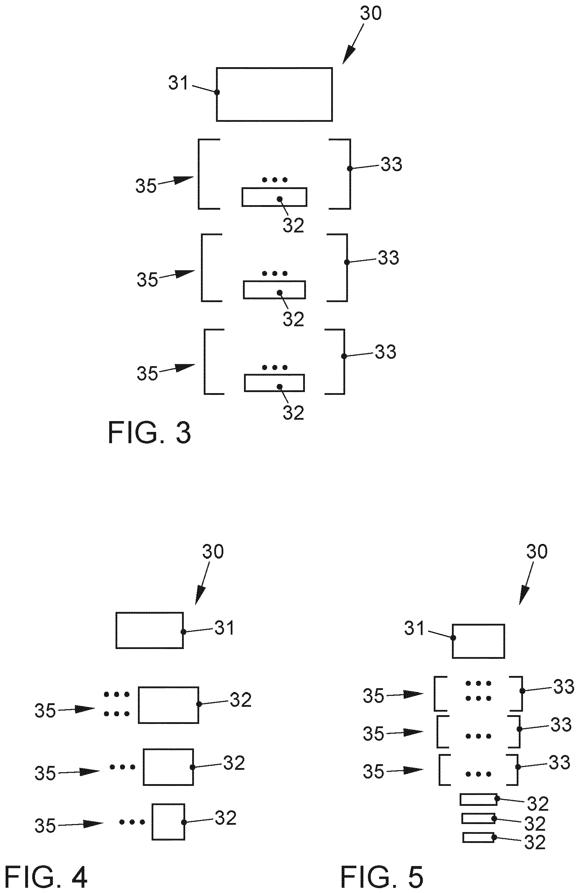

In Fig. 2 ist ein Ablaufschema eines erfindungsgemäßen Verfahrens gezeigt, das mit dem Fahrerinformationssystem 10 aus Fig. 1 ausführbar ist. In einem Schritt S1 wird die grafische Benutzerschnittstelle 18 auf der Anzeigeeinrichtung 12 angezeigt, und zwar in der Weise, dass die Hauptsuchfunktion 30 und gleichzeitig Verknüpfungen 32 zu den Diensten 26-28 angezeigt werden. In einem Schritt S2 beginnt ein Bediener eine Sucheingabe für die Hauptsuchfunktion 30 zu tätigen, welche dann z.B. als eine Such-Zeichenkette in der Suchmaske der Hauptsuchfunktion 30 erscheint. Bevorzugt werden dann unmittelbar Suchtreffer für sämtliche der verknüpften Dienste 26-28 ermittelt, was wiederum in der vorstehend geschilderten mittelbaren Weise erfolgen kann. Diese Suchtreffer können dann, wie nachstehend beispielhaft anhand der Figuren 3 bis 5 erläutert, als eine Trefferliste zusätzlich zu der Hauptsuchfunktion 30 und den Verknüpfungen 32 angezeigt werden. In einem Schritt S3 betätigt der Bediener dann eine der Verknüpfungen 32. In einem Schritt S4 wechselt deshalb die Anzeigeeinrichtung 12 zu einer Ansicht von dem entsprechend über die Verknüpfung 32 abgerufenen Dienst 26-28. In der vorstehend erwähnten Weise wird dabei bevorzugt die Dienstsuchfunktion dieses Dienstes 26-28 angezeigt, vorzugsweise mit darin bereits enthaltener, bisher eingegebener Such-Zeichenkette.

In den Figuren 3 bis 5 werden beispielhafte Trefferlisten angezeigt, wie sie von der Hauptsuchfunktion 30 ermittelt werden können, sobald eine Such-Zeichenkette vorliegt. Darin sind die Suchtreffer einzelner Dienste gruppiert und grafisch als einander zugehörig markiert. Ferner sind auch die Verknüpfungen diesen einzelnen Gruppen zugeordnet. Ein Benutzer kann dann direkt erkennen, für welchen Dienst für ihn besonders relevante Suchtreffer ermittelt wurden und dann über die Verknüpfung 32 direkt zu diesem Dienst 26-28 wechseln.

In Fig. 3 ist eine Variante dargestellt, bei der zunächst eine Hauptsuchmaske 31 eingetragen ist. Darunter sind drei Gruppen von Suchtreffern angezeigt, die durch ein örtliches Zusammenfassen und ein optionales grafisches Einrahmen mittels der Rahmen 33 als einander zugehörig bzw. als Gruppe kenntlich gemacht sind. Weitere Möglichkeiten zur grafischen Gruppierung und/oder Zusammenfassung mehrerer Suchtreffer als entsprechende Gruppe wurden vorstehend genannt. Eine erste Gruppe 35 betrifft dabei Suchtreffer des Navigationsdienstes 26. Über die Verknüpfung 32 dieser Gruppe 35 kann dann direkt zum Navigationsdienst 26 gewechselt werden. Eine zweite und eine dritte Gruppe 35 betreffen dann Suchtreffer für die verbleibenden Dienste 27, 28 und enthalten jeweils eine Verknüpfung 32 zu dem jeweiligen Dienst.

Durch Positionierung der Verknüpfungen 32 zwischen den gruppenspezifischen Suchtreffern sind bei der Variante von Fig. 3 die Suchtreffer der einzelnen Dienste 26-28 durch die Verknüpfungen 32 ferner jeweils voneinander getrennt und/oder grafisch separiert.

Im Fall von Fig. 4 sind die Suchtreffer derart zusammengefasst, dass sie einer Verknüpfung 32 zu einem dazugehörigen Dienst jeweils in einer gemeinsamen Zeile oder auf einer gemeinsamen Höhe der Anzeigeeinrichtung 12 gegenüberstehen. Anders ausgedrückt kann die Verknüpfung 32 mit zumindest einem der Suchtreffer einer Gruppe 35 in einer gemeinsamen Zeile bzw. auf einer gemeinsamen Höhe angeordnet sein. Die Verknüpfungen 32 sind in diesem Fall bevorzugt grafische Symbole. Eine Größe und insbesondere (zeilenweise) Höhe dieser grafischen Symbole kann der Anzahl der Suchtreffer entsprechen. Je Suchtreffer kann z.B. eine Zeile verwendet werden, sodass für drei Suchtreffer drei Zeilen und ein entsprechend dimensioniertes Symbol vorgesehen sein kann. Liegt nur ein Suchtreffer vor, kann das Symbol entsprechend kleiner sein (z.B. lediglich die Größe einer Zeile umfassen). Zusammengefasst sind im Fall von Fig. 4 Suchtreffer und Verknüpfungen 32 nebeneinander positioniert.

Bei der Variante von Fig. 5 ist schließlich gezeigt, dass die Suchtreffer mittels Rahmenelementen analog zu dem Beispiel aus Fig. 3 gruppiert werden können. Allerdings sind die Verknüpfungen 32 hierbei nicht gemeinsam mit den Suchtreffern gruppiert. Stattdessen sind die Verknüpfungen 32 unterhalb der Suchtreffer bzw. Suchtreffer-Gruppen 35 angeordnet. Dies erfolgt jedoch vorzugsweise in der Reihenfolge der entsprechenden Gruppen 35. D.h. die oberste Verknüpfung 32 gilt für die oberste Suchtreffer-Gruppe 35, die mittlere für die mittlere Suchtreffer-Gruppe 35 usw.

Mit den Varianten der Figuren 3 bis 5 werden einem Bediener Wechsel in die relevanten Dienste 26-28 bzw. zu deren Dienstsuchfunktionen zusätzlich erleichtert.

### Bezugszeichenliste

- 10: Fahrerinformationssystem
- 12: Anzeigeeinrichtung
- 14: Prozessoreinrichtung
- 16: Speichereinrichtung
- 18: grafische Benutzerschnittstelle
- 26: (Navigations)-Dienst
- 27: (Musik)-Dienst
- 28: (Handbuch)-Dienst
- 30: Hauptsuchfunktion
- 31: Hauptsuchmaske
- 32: Verknüpfung
- 33: Rahmenelement
- 35: Gruppe

## Patentansprüche

1. Fahrerinformationssystem (10) für ein Fahrzeug, mit einer Benutzerschnittstelle (18) und mit einer Mehrzahl von Diensten (26-28), die von einem Bediener über die Benutzerschnittstelle (18) aufrufbar sind,
wobei die Benutzerschnittstelle (18) eine Hauptsuchfunktion (30) umfasst, mit der Suchtreffer verschiedener Dienste (26-28) ermittelbar sind, und die Dienste (26-28) jeweils eine Dienstsuchfunktion umfassen, mit der Suchtreffer eines entsprechenden Dienstes (26-28) ermittelbar sind;
**dadurch gekennzeichnet, dass**
die Benutzerschnittstelle (18) eingerichtet ist, gleichzeitig die Hauptsuchfunktion (30) und wenigstens eine Verknüpfung (32) zu einer Dienstsuchfunktion von einem der Dienste (26-28) anzuzeigen, wobei das Fahrerinformationssystem (10) dazu eingerichtet ist, bei einem Betätigen einer Verknüpfung (32) eine bereits eingegebene Such-Zeichenkette an die Dienstsuchfunktion des dazugehörigen Dienstes (26-28) zu übermitteln, wobei die Such-Zeichenkette der Hauptsuchfunktion (30) in eine Suchmaske der Dienstsuchfunktion übernommen wird, sowie zu einer Ansicht dieser Suchmaske zu wechseln.

2. Fahrerinformationssystem (10) nach Anspruch 1, wobei bei einem Betätigen einer Verknüpfung (32) der dazugehörige Dienst (26-28) und/oder dessen Dienstsuchfunktion anzeigbar ist.

3. Fahrerinformationssystem (10) nach Anspruch 1 oder 2, wobei bei einem Betätigen einer Verknüpfung (32) die Hauptsuchfunktion (30) nicht mehr angezeigt wird und/oder nicht mehr bedienbar ist.

4. Fahrerinformationssystem (10) nach einem der vorangehenden Ansprüche, wobei für eine Such-Zeichenkette der Hauptsuchfunktion (30) Suchtreffer mehrerer Dienste (26-28) gleichzeitig anzeigbar sind.

5. Fahrerinformationssystem (10) nach Anspruch 4, wobei die Suchtreffer nach Diensten (26-28) gruppiert anzeigbar sind.

6. Fahrerinformationssystem (10) nach Anspruch 5, das ferner dazu eingerichtet ist, einer angezeigten Gruppe (35) von Suchtreffern die Verknüpfung (32) zu dem Dienst (26-28) dieser Gruppe (35) zuzuordnen.

7. Fahrerinformationssystem (10) nach einem der vorangehenden Ansprüche, das ferner dazu eingerichtet ist, nur von denjenigen Diensten (26-28) Verknüpfungen (32) anzuzeigen, für die Suchtreffer auf Basis einer Such-Zeichenkette der Hauptsuchfunktion (30) ermittelt wurden.

8. Verfahren zum Betreiben eines Fahrerinformationssystems (10) von einem Fahrzeug, wobei das Fahrerinformationssystem (10) eine Benutzerschnittstelle (18) mit einer Mehrzahl von Diensten (26-28) umfasst, die von einem Bediener über die Benutzerschnittstelle (18) aufrufbar sind, und
wobei die Benutzerschnittstelle (18) eine Hauptsuchfunktion (30) umfasst, mit der Suchtreffer verschiedener Dienste (26-28) ermittelbar sind, und die Dienste (26-28) jeweils eine Dienstsuchfunktion umfassen, mit der Suchtreffer eines entsprechenden Dienstes (26-28) ermittelbar sind;
wobei das Verfahren umfasst:
gleichzeitiges Anzeigen der Hauptsuchfunktion (30) und wenigstens einer Verknüpfung (32) zu einer Dienstsuchfunktion von einem der Dienste (26-28), wobei bei einem Betätigen einer Verknüpfung (32) eine bereits eingegebene Such-Zeichenkette an die Dienstsuchfunktion des dazugehörigen Dienstes übermittelt und die Such-Zeichenkette der Hauptsuchfunktion (30) in eine Suchmaske der Dienstsuchfunktion übernommen wird, wobei zu einer Ansicht dieser Suchmaske gewechselt wird.

## Claims

1. Driver information system (10) for a vehicle, having a user interface (18) and having a multiplicity of services (26-28) that are able to be called by a user via the user interface (18),
wherein the user interface (18) comprises a main search function (30) by way of which it is possible to ascertain search hits for various services (26-28), and the services (26-28) each comprise a service search function by way of which it is possible to ascertain search hits for a corresponding service (26-28);
**characterized in that**
the user interface (18) is configured to simultaneously display the main search function (30) and at least one link (32) to a service search function of one of the services (26-28), wherein the driver information system (10) is configured, when a link (32) is actuated, to transfer a previously input search character string to the service search function of the associated service (26-28), wherein the search character string of the main search function (30) is copied into a search mask of the service search function, and to change to a view of this search mask.

2. Driver information system (10) according to Claim 1, wherein, when a link (32) is actuated, the associated service (26-28) and/or its service search function is able to be displayed.

3. Driver information system (10) according to Claim 1 or 2, wherein, when a link (32) is actuated, the main search function (30) is no longer displayed and/or no longer able to be operated.

4. Driver information system (10) according to one of the preceding claims, wherein search hits for multiple services (26-28) are able to be displayed simultaneously for a search character string of the main search function (30) .

5. Driver information system (10) according to Claim 4, wherein the search hits are able to be displayed in a manner grouped by services (26-28).

6. Driver information system (10) according to Claim 5, furthermore configured to assign, to a displayed group (35) of search hits, the link (32) to the service (26-28) of this group (35).

7. Driver information system (10) according to one of the preceding claims, furthermore configured to display links (32) for only those services (26-28) for which search hits have been ascertained on the basis of a search character string of the main search function (30).

8. Method for operating a driver information system (10) of a vehicle, wherein the driver information system (10) has a user interface (18) having a multiplicity of services (26-28) that are able to be called by a user via the user interface (18), and
wherein the user interface (18) comprises a main search function (30) by way of which it is possible to ascertain search hits for various services (26-28), and the services (26-28) each comprise a service search function by way of which it is possible to ascertain search hits for a corresponding service (26-28);
wherein the method comprises:
simultaneously displaying the main search function (30) and at least one link (32) to a service search function of one of the services (26-28), wherein, when a link (32) is actuated, a previously input search character string is transferred to the service search function of the associated service, and the search character string of the main search function (30) is copied into a search mask of the service search function, wherein a change is made to a view of this search mask.

## Revendications

1. Système d'information du conducteur (10) pour un véhicule, comprenant une interface utilisateur (18) et comprenant une pluralité de services (26-28), qui peuvent être appelés par un opérateur par le biais de l'interface utilisateur (18),
l'interface utilisateur (18) comportant une fonction de recherche principale (30), avec laquelle peuvent être déterminés des résultats de recherche de différents services (26-28), et les services (26-28) comportant respectivement une fonction de recherche de service avec laquelle peuvent être déterminés des résultats de recherche d'un service (26-28) correspondant ; **caractérisé en ce que**
l'interface utilisateur (18) est conçue pour afficher simultanément la fonction de recherche principale (30) et au moins un lien (32) vers une fonction de recherche de service de l'un des services (26-28), le système d'information du conducteur (10) étant conçu pour, lors d'un actionnement d'un lien (32), communiquer une chaîne de caractères de recherche déjà saisie à la fonction de recherche de service du service (26-28) associé, la chaîne de caractères de recherche de la fonction de recherche principale (30) étant reprise dans un masque de recherche de la fonction de recherche de service, ainsi que pour basculer vers une vue de ce masque de recherche.

2. Système d'information du conducteur (10) selon la revendication 1, le service (26-28) associé et/ou sa fonction de recherche de service pouvant être affiché lors d'un actionnement d'un lien (32).

3. Système d'information du conducteur (10) selon la revendication 1 ou 2, la fonction de recherche principale (30) n'étant plus affichée et/ou ne pouvant plus être utilisée lors d'un actionnement d'un lien (32).

4. Système d'information du conducteur (10) selon l'une des revendications précédentes, des résultats de recherche de plusieurs services (26-28) pouvant être affichés simultanément pour une chaîne de caractères de recherche de la fonction de recherche principale (30).

5. Système d'information du conducteur (10) selon la revendication 4, les résultats de recherche pouvant être affichés regroupés par services (26-28).

6. Système d'information du conducteur (10) selon la revendication 5, qui est en outre conçu pour affecter à un groupe (35) affiché de résultats de recherche le lien (32) vers le service (26-28) de ce groupe (35).

7. Système d'information du conducteur (10) selon l'une des revendications précédentes, qui est en outre conçu pour n'afficher que les liens (32) des services (26-28) pour lesquels les résultats de recherche ont été déterminés sur la base d'une chaîne de caractères de recherche de la fonction de recherche principale (30).

8. Procédé pour faire fonctionner un système d'information du conducteur (10) d'un véhicule, le système d'information du conducteur (10) comprenant une interface utilisateur (18) comprenant une pluralité de services (26-28), qui peuvent être appelés par un opérateur par le biais de l'interface utilisateur (18), l'interface utilisateur (18) comportant une fonction de recherche principale (30), avec laquelle peuvent être déterminés des résultats de recherche de différents services (26-28), et les services (26-28) comportant respectivement une fonction de recherche de service avec laquelle peuvent être déterminés des résultats de recherche d'un service (26-28) correspondant ;
le procédé comprenant :
affichage simultané de la fonction de recherche principale (30) et d'au moins un lien (32) vers une fonction de recherche de service de l'un des services (26-28), une chaîne de caractères de recherche déjà saisie étant communiquée à la fonction de recherche de service du service associé lors d'un actionnement d'un lien (32), et la chaîne de caractères de recherche de la fonction de recherche principale (30) étant reprise dans un masque de recherche de la fonction de recherche de service, un basculement vers une vue de ce masque de recherche étant effectué.
